# EUROPEAN PATENT APPLICATION

(11) **EP 4 679 266 A1**
(43) Date of publication of application: **14.01.2026**
(21) Application number: 24188207.5
(22) Date of filing: 12.07.2024
(51) Int. Cl.: G06F 9/451, G05B 19/00, G06N 20/00, G05B 19/02, G05B 19/04, G05B 19/18, G05B 19/418, G06F 8/33, G06F 8/34, G06F 8/36, G06N 3/08, G06N 5/022

(54) **METHOD FOR ASSISTING A USER IN COMPUTER-AIDED GENERATION OF AT LEAST A PART OF A SOFTWARE APPLICATION FOR AN INDUSTRIAL PROCESS**

(71) Applicant: ABB SCHWEIZ AG, 5400 Baden (CH)
(72) Inventor: BORRISON, Reuben, 68782 Brühl (DE); SCHOCH, Nicolai, 69120 Heidelberg (DE); TAN, Ruomu, 68309 Mannheim (DE)
(74) Representative: Maiwald GmbH

(57) **Abstract**

The disclosure relates to a method (100) for assisting a user in computer-aided generation of at least a part (11) of a software application (10) for an industrial process, the method (100) comprising:
- obtaining assistance data (4) for assisting the user in the computer-aided generation of the at least part (11) of the software application (10), wherein the assistance data (4) is based on process mining of computer-aided generation data (1), the computer-aided generation data (1) relating to previous computer-aided generations of at least parts (11) of software applications (10) for other industrial processes by one or more users, the process mining being at least supported by an artificial intelligence, AI, model (3); and
- providing the assistance data (4) for assisting the user in computer-aided generation of the at least part (11) of the software application (10) by the user.

## Description

### TECHNICAL FIELD

The present invention relates to a method for assisting a user in computer-aided generation of at least a part of a software application for an industrial process, a computer program product, and a data processing system.

### BACKGROUND

Due to global demographic trends, the work force, specifically of skilled and knowledgeable engineers, is aging. This results in a loss of knowledge and experience in various industries and processes, including the process, automation, and control engineering for industrial processes.

In the industrial process industry, software applications are typically used for various process, automation, and control engineering tasks. These software applications are typically generated or, in other words, designed specifically for the industrial processes, in particular industrial plants, where the tasks are to be carried out. The task of generating the software application can be aided by a computer and another software for the generation of at least a part of the software application. Still, the generating of the software application typically requires manual input from an engineer in view of the complexity and the large variety of different factors to be considered for individual industrial processes.

The manual input requires a lot of experience and knowledge from previous designs of software applications. Without it, the design of the software application can take very long or result in many errors. However, the aging force may leave a knowledge and experience gap in the future, which may lead to prolonged durations and increased effort to design a software application for an industrial process and result in many errors that may be difficult to resolve.

### SUMMARY

The above problem is at least partially solved or alleviated by the subject matters of the independent claims of the present disclosure, wherein further examples are incorporated in the dependent claims.

According to an aspect of the present disclosure, there is provided a method for assisting a user in computer-aided generation of at least a part of a software application for an industrial process, in particular of an industrial plant and more particularly for controlling an industrial process of an industrial plant, the method comprising:
- obtaining assistance data for assisting the user in the computer-aided generation of the at least part of the software application, wherein the assistance data is based on process mining of computer-aided generation data, the computer-aided generation data relating to previous computer-aided generations of at least parts of software applications for other industrial processes by one or more users, the process mining being at least supported by an artificial intelligence, Al, model; and
- providing the assistance data for assisting the user in computer-aided generation of the at least part of the software application by the user.

Hence, the method provides for assisting a user in the computer-aided generation of at least part of a software application for an industrial process by using assistance data that is based on process mining of previous computer-aided generations of at least parts of software applications for other industrial processes. These previous computer-aided generations may have been carried out or conducted by one or more users, specifically engineers, which have large experience and knowledge in the computer-aided generation of the software applications for various industrial processes. The one or more users may be from an aging work force, who within the next years, e.g., 10 or 15 years, may be retiring and thus not be available to generate new software applications for new industrial processes in the future. Still, their knowledge and experience may be preserved by process mining their current tasks of generating software applications for current industrial processes. Process mining as used herein generally relates to the technique or method of analysing the computer-aided generation data to understand the operational process of generating, by the aid of the computer, at least a part of a software application for other industrial processes as carried out by the one or more users.

Specifically, by using an artificial intelligence, Al, model or, in other words, processing component, which may in particular be in the form of a machine learning, ML, processing component, the process mining may be at least supported or, in other words, assisted, in particular carried out. The AI model or processing component, which may be implemented in software and/or hardware, may in particular be provided with the computer-aided generation data relating to the previous computer-aided generations of at least parts of software applications for other industrial processes by one or more users. For the process mining, the AI model may analyze, identify and/or learn the processes, steps, sequences and/or patterns of the computer-aided generations by the knowledgeable and experienced engineers. In other words, the AI model may be trained for process mining using the computer-aided generation data. Further, the AI model may provide or generate the assistance data or at least the assistance data may be obtained, in particular generated, based on computer-aided generation data that was obtained by process mining using the AI model. The artificial intelligence, Al, in particular machine learning, ML, model or processing component may thus, e.g., based on neural networks, deep learning techniques and similar, preserve the knowledge and experience of how to generate at least parts of software applications for various industrial processes based on the computer-aided generation data. Specifically, the AI model may have the computer-aided generation data as input and the process mining as result or output, in particular in the form of the assistance data.

When the assistance data is provided, it may assist another user, specifically an engineer with little or no experience or knowledge or how to generate at least parts of software applications for industrial processes, in the task of generating it. The assistance data may for example be comprising computer code or software or at least instructions on how to generate the at least part of the software application for the user, which may assist or support the user in the process of generating the at least part of the software application using the aid of a computer. In particular, the computer code or software or the instructions may be generated or provided by the AI model.

The method may in particular be a computer-implemented method. Accordingly, one, multiple or all steps of the method may be carried out by a data processing system, which may comprise one or more computers. In particular, the assistance data may be obtained by the data processing system and the assistance data may be provided, in particular generated, by the data processing system.

In an example, the method may further comprise:
- receiving user input for the computer-aided generation of the at least part of the software application; and
- generating the at least part of the software application based on the provided assistance data and/or the received user input.

Specifically, the user input may be received on or by the data processing system. For example, the user input may be obtained on user input means such as a keyboard, mouse, touch display and similar means for receiving user input, and consequently forwarded to the data processing system. For example, the user input may be in the form of mouse clicks, keyboard typing, touch interactions, and similar. The received user input may partially or fully generate the at least part of the software application. Additionally, or alternatively, the assistance data may partially or fully generate the at least part of the software application. In particular, the assistance data may assist or guide the user to generate the at least part of the software application aided by computer. For example, for difficult tasks or problems during the computer-aided generation, the assistance data may be assisting or, in other words, supporting the user by indicating which user input is required or beneficial, e.g., where to click, what to type, which interactions to perform with providing user input, or provide explanations, solutions, and similar.

In an example, the computer-aided generation data may be indicative of user inputs of the one or more users in a second software application for computer-aided generation of the at least part of the software application. Specifically, a second software application may be used, in particular executed on the data processing system or generally a computer. This second software application may be configured to generate, in a computer-aided manner, the at least part of the software application, which may herein also be referred to as a first software application. Specifically, the second software application may be a programming software application, e.g., with a graphical user interface, GUI, enabling the one or more users to generate the first software application. In particular, the second software application with the GUI may enable the one or more users to generate the first software application without requiring the one or more users to code the first software application or only with the option of coding, meaning that the one or more users need to write software or program code. Instead, the computer-aided generation of the first software application may be performed on a visual basis through the GUI of the second software application, which may for example be providing pre-coded blocks or modules for different kinds of process plant equipment, connections between process plant equipment, and so on.

In an example, the computer-aided generation data may relate to previous computer-aided generations of the at least parts of the software applications for the other industrial processes by one or more knowledgeable users, for which the computer-aided generation data has been stored for process mining thereof. In other words, the previous computer-aided generations of the at least parts of the software applications, specifically through using the second software application, may be stored as computer-aided generation data for later process mining. The stored computer-aided generation data may relate to one or more knowledgeable and/or experienced users, specifically engineers, who may soon retire and whose knowledge and experience may be lost if it is not conserved through process mining and provided as assistance data by the method as suggested herein.

In an example, the computer-aided generation data may comprise event and/or action logs for solving one or more problems in the previous computer-aided generations of the at least parts of the software applications for the other industrial processes. Such event and/or action logs, in particular as provided or issued by the second software application, may be used for processing mining. Specifically, such event and/or action logs may provide valuable information or insights on how to solve particular problems or issues during the computer-aided generation of the at least part of the software application. An event log may log events during the computer-aided generation, e.g., in the form of events generated by the second software application. An action log may log actions caused by the user through their user input in or on the second software application.

In an example, the computer-aided generation data includes web scraped data relating to the computer-aided generation of the at least part of the software application. In other words, data scraped from the web, may be additionally used for process mining. Such data may provide additional knowledge, specifically on the industrial processes, which may accordingly be used by the AI model for process mining, in particular understanding the computer-aided generation as it may be carried out by using the second software application. Additionally

In an example, the assistance data may comprise software instructions for automatically generating at least a portion of the at least part of the software application and/or for guiding the user in manually generating at least a portion of the at least part of the software application based on user input. The software instructions may for example be carried out by the data processing system for automatically generate at least a portion of the at least part of the software application. That at least portion may for example be a starting portion or starting configuration of the at least part of the software application. Based on this starting configuration, the user may provide user input to further configure this starting configuration of the at least part of the software application. The starting configuration may be easing the process of the computer-aided generation by providing a good starting point for the full computer-aided generation of the at least part of the software application. Additionally, or alternatively, the user may be guided by the software instructions to generate the at least portion of the at least part of the software application. For example, the software instructions may be in the form of prompts, explanations, verbal, written or video instructions and similar for the user that enable the user to provide the user input required to generate the at least part of the software application. The at least portion may again be a starting configuration or an intermediate or final configuration or parts thereof, e.g., improved portions of the at least part of the software application after obtaining the initial or starting configuration of the at least part of the software application.

In an example, the assistance data may comprise video explanations for assisting the user in the computer-aided generation of the at least parts of the software application. The video explanations may be for example showing the second software application, in particular a GUI thereof. Specifically, the video explanations may include text and/or audio explaining steps, processes, sequences and/or similar to be carried out or, in other words, which user input is to be provided for the computer-aided generation of the at least part of the software application. The video explanations may be configured to generally explain the computer-aided generation and/or to explain how to solve specific problems occurring during the computer-aided generation, e.g., relating to the particular industrial process or industrial plant for the software application is to be used.

In an example, the assistance data may be configured for assisting the user in the computer-aided generation of a graphical user interface as the at least part of the software application. In other words, the at least part of the software application is a graphical user interface, which may be later used when executing the software application in conjunction with the industrial process or its industrial plant. For example, the software application may be initially generated for a particular industrial process or industrial plant such that it may consequently be used when that industrial process is carried out or the industrial plant is in operation. For better control of the software application, the software application may comprise a graphical user interface, which may be comprising different graphical elements such that the software application may be easily controlled by an operator of the industrial plant or process without requiring coding in a terminal or similar.

In an example, the software application may be a control software for controlling at least parts of the industrial process, in particular of the industrial plant. Through the GUI in particular, an operator may conveniently and intuitively control the industrial process or plant. When the GUI is generated or programmed correctly using the assistance data, it may display all necessary information, all necessary controls, and similar in a structured and interconnected manner without causing any errors, such that the industrial process or part thereof may be safely controlled.

In an example, the assistance data may be configured to assist the user in configuring one or more of the following: a template for at least a part of the industrial process to be controlled by the control software, a control loop of industrial components to be controlled by the control software, a human-machine-interface of the control software, or safety interlocks and/or alarms of the control software. Generally, the industrial process may be from an industrial plant and part of an overall or larger industrial process of that industrial plant. The industrial plant may be any plant such as but not limited to a power plant, e.g., a gas-fired power plant, a combined cycle power plant, a nuclear plant, and similar, a fuel production plant, a chemical plant, and so on. An industrial plant may generally comprise several industrial components, which may need to be controlled by one or more control loops to ensure a safe industrial process. A template, e.g., in the form of a faceplate, may be required for controlling the industrial process. For example, such template or faceplate may be comprising a piping and instrumentation diagram of a process plant. The template or faceplate may visually and/or logically link the respective control or industrial components of the industrial process or plant with one another. For the control of the industrial process, a human-machine-interface may be provided. Such human-machine-interface may generally be in the form of a computer, e.g., a control terminal comprising a computer. Also, safety interlocks and/or alarms of the control software may be required to ensure the safety of the industrial process. Any one or more of the aforementioned may be needed to be configured as part of the computer-aided generation of the at least part of the software application and may be assisted by the assistance data.

In an example, the software application may be configured for an industrial process of an industrial plant, in particular a processing plant or a manufacturing plant. As explained, any processing plant or manufacturing plant involving an industrial process, e.g., a chemical process, a manufacturing or production process, and similar, may be used.

In an example, the AI model may be a generative AI processing component based on at least one Large Language Model, LLM. The generative AI processing component may be implemented in or provided as software and executed on the same data processing system as the one which may be executing the method or on a different one or several different ones, for example. For example, the AI model may be executed on distant or remote servers, which may have increased data processing capabilities and storages for storing one or more LLMs. Alternatively, these may be locally stored and executed. The generative AI model may be trained with or based on any LLM, e.g., general LLM and/or LLM specific for computer-aided generation of software applications in addition to the computer-aided generation data. In particular, the AI model may be based on at least one multimodal LLM and/or be configured to process multimodal data, specifically video data and/or screen recording data. Specifically, the multimodality may relate to or include image data and/or video data in addition to text data. For example, the previous computer-aided generation data may be recordings of one or more screens showing or displaying the computer-aided generations of the at least parts of the software applications for the other industrial processes by the one or more users. Consequently, the AI model may process the multimodal data provided thereby in the form of images and text for process mining.

According to a second aspect of this disclosure, there are provided a computer program product comprising instructions which, when executed by a data processing system, causes the data processing system to carry out the method of the first aspect of this disclosure.

The computer program product may be a computer program as such, meaning a computer program consisting of or comprising program code to be executed by the data processing system, in particular one or more computers.

Alternatively, the computer program product may be a product such as a data storage, in particular computer-readable data storage medium, on which the computer program may be temporarily or permanently stored.

According to a third aspect of this disclosure, there is provided a data processing system configured to carry out the method according to the first aspect of this disclosure. For this purpose, the data processing system may comprise a computer or processing unit and/or the computer program product of the second aspect of this disclosure, for example.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a part of a software application for an industrial process;
Figure 2 shows a data processing system;
Figure 3 shows a method for assisting a user in computer-aided generation of the part of the software application of Fig. 1; and
Figure 4 shows a flow chart according to the method of Fig. 3.

The Figures are schematic only and not true to scale. In principle, identical or like parts, elements and/or steps are provided with identical or like reference numerals in the Figures.

### DETAILED DESCRIPTION OF THE INVENTION

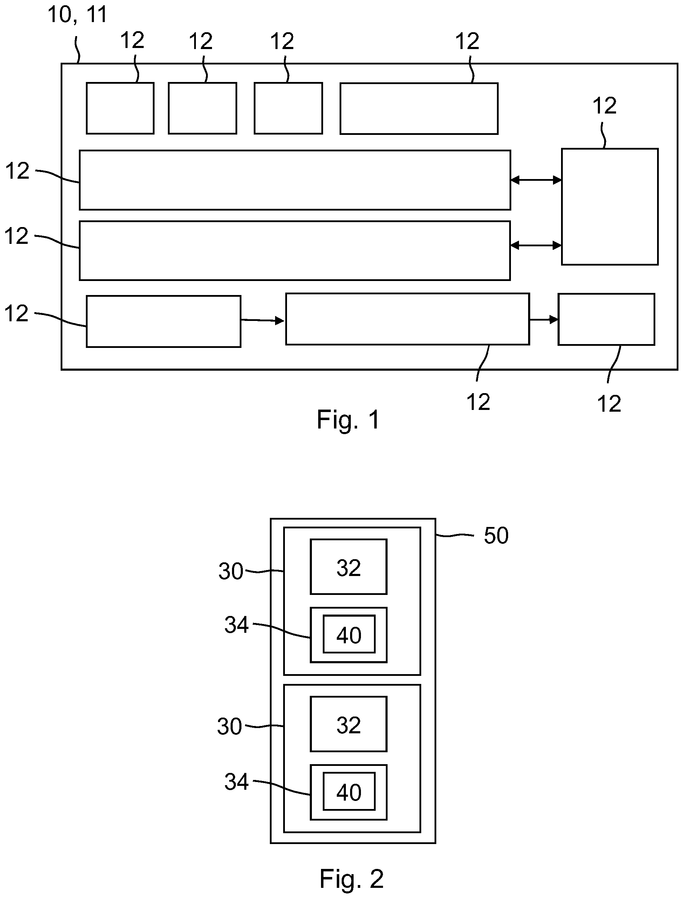

Figure 1 shows a schematic illustration of a part 11 of a software application 10 for an industrial process and/or an industrial plant, which may be carrying out or configured for an industrial process. Specifically, the software application 10 may be a control software for controlling at least a part or parts of the industrial process and/or the industrial plant, e.g., sub-processes and/or processing equipment of the industrial plant.

In this example, the part 11 of the software application 10 is a graphical user interface 11, GUI, for an operator or controller of the industrial process and/or industrial plant. Such GUI 11 may comprise a template or faceplate. The GUI 11, template or faceplate as schematically shown in Fig. 1 may comprise several visual software elements 12. These visual software elements 12 may be representing any one or more of: the various processing equipment of the industrial plant, sub-processes of the industrial process, control narratives (as schematically indicated by the arrows in Fig. 1) or control loops for controlling the industrial process and/or industrial plant, input and/or output points for variables in the control narratives or control loops, safety interlocks and/or alarms, and similar.

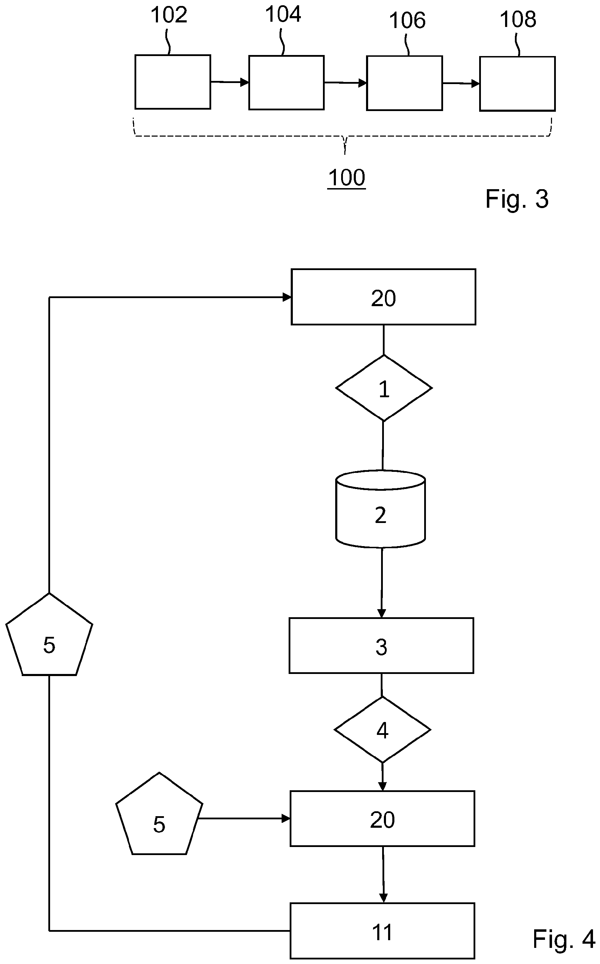

To provide these visual software elements 12 as part of the GUI 11 or, in other words, to generally configure the GUI 11 with its template or faceplate, a user, specifically an engineer, may be needed, who may be assisted by a computer to generate the GUI 11. Specifically, there may be a second software application 20 (see Fig. 4) in addition to the software application 10 or, in other words, first software application 10. The second software application 20 may be configured to generate the first software application 10 based on user input provided through a computer, specifically input means thereof such as keyboard, mouse, and similar.

Figure 2 schematically shows a data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 as schematically illustrated in Fig. 3. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34.

Figure 3 schematically illustrates a method 100 for assisting a user in computer-aided generation of the GUI 11 of the software application 10 for the industrial process and/or industrial plant. The method 100 is further explained herein with reference to the flow chart of Figure 4 schematically illustrating elements being used and/or generated during the method 100.

For the purpose of method 100, in a step 102, computer-aided generation data 1 is being generated by using the second software application 20, which may be executed on any one of the data processing apparatuses 30, for example. This computer-aided generation data 1 may relate to previous computer-aided generations of GUIs 11 for software applications 10, specifically control software, for other industrial processes and/other industrial plants than the one for which a new GUI 11 for a new software application 11 for a new industrial process and/or industrial plant, e.g., a greenfield installation, shall be generated. Computer-aided means that a computer, in this case the data processing apparatus 30, has been used to generate the GUIs 11. Specifically, one or more knowledgeable users, in particular engineers, may have generated the GUIs 11 using the second software application 20, which may be a programming software for generating the first software application 10.

For example, the computer-aided generation data 1 may be obtained by recording a screen of the users generating the first software application 10 for other industrial processes and/or other industrial plants using the second software application 20 and/or the data processing apparatus 30. Specifically, during the generating, the data processing apparatus 30 may receive input on input means such as keyboard, mouse, etc. on the data processing apparatus 30 from the one or more knowledgeable users. This input may represent the knowledge and experience of how a knowledgeable user or engineer generates the first software application 10 and potentially how that engineer solves specific issues in the process of generating the first software application 10.

For the generating of the computer-aided generation data 1, instead or in addition to real data from real generations of GUIs11 of the first software application 10, a simulation environment or software may be used, for example, which may be simulating the actual data processing apparatus 30 and/or software, e.g., in the form of an industrial operator control platform, to generate the GUI 11 of the first software application 10. For example, common troubleshooting scenarios such as the creation of a faceplate of the GUI 11 may involve selecting certain software elements 12 as illustrated in Fig. 1 on the screen and selecting particular configuration options as provided by the second software application 20.

The computer-aided generation data 1 may be stored in a database 2, e.g., of the data processing system 50. In this way, computer-aided generation data 1 may be accumulated from various previous generations of first software applications 10 for other industrial processes and/or industrial plants and/or from various knowledgeable users.

Then, in a step 104 of method 100, the stored computer-aided generation data 1 may be provided to or obtained by an artificial intelligence, Al, model 3, which may be a generative AI model based on a multimodal Large Language Model, LLM. The AI model 3 may be executed by any one of the data processing apparatuses 30, for example. For example, the recorded screen of the user(s) during generating the first software applications 10 may be provided as image and/or video data to the AI model 3. The AI model 3 may be pre-trained and/or fine-tuned. For fine-tuning or generally training the AI model 3, the computer-aided generation data 1 may be used, which is generated for real industrial processes and/or plants or in a simulation environment as described above.

Then, in a step 106 of method 100, the AI model 3 may perform or at least support a process mining of the computer-aided generation data 1, which generates assistance data 4, which is thereby obtained at the data processing system 50. The assistance data 4 is configured to assist new users in the computer-aided generation of GUIs 11 for new software applications 10 of new industrial processes and/or industrial plants.

In general, when generating the GUI 11 or any other part of the first software application 10 by using the method 100, the assistance data 4 may be configured to assist a new user or engineer without or with little previous knowledge or experience on how to do so and/or who needs to follow certain procedures to execute complex tasks for the generating of the GUI 11. For example, when a control engineer manually configures the control software or system for a process plant in a greenfield application, they may need to follow certain steps, e.g., choosing a template for the control project, going through control narratives provided by a customer, set up individual control loops one by one, generate input and outpoint points for the variables in each control loop, creating the corresponding faceplates of process components and process / controlled variables for a human-machine-interface of the control system, and/or configuring safety interlocks and/or alarms. These steps usually need to be carried out in a certain sequence. In the procedure, the engineer needs to refer to various tools (e.g., control builder) and documentation (e.g., control narratives provided by the customer, configuration manuals) for useful information and make multiple decisions based on their experience and knowledge.

To make the process better in that less errors are made by the new user and the process is less time consuming, in a step 108 of method 100, which may, as all the previous steps, be executed by the data processing system 50, the assistance data 4 may be provided to or as part of the second software application 20 executed by the data processing system 50, specifically another data processing apparatus 30 than the one or ones that were used during steps 102, 104 and/or 106 of method 100. For example, the assistance data 4 may be comprising software instructions for automatically generate the GUI 11, at least an initial or starting configuration thereof. Also, or alternatively, for example, the assistance data 4 may be configured for guiding the user in manually generate the GUI 11 based on user input 5 as indicated in Fig. 4. For example, the assistance data 4 may be comprising video data, such as one or more video tutorials, as may be generated by the AI model 3. These video tutorials may be explaining the necessary steps or user inputs 5 required to generate the GUI 11. The user input 5 may be provided by the new user 5 on input means as previously mentioned. As a result, after step 108 of method 100, the GUI 11 as part of the first software application 10 may be obtained.

As may be appreciated according to this disclosure, the assistance data 4 may be for assisting the user on one or more levels, i.e., by at least partially generating the GUI 11 and/or providing help to the user, e.g., in the form of video tutorials, prompts, explanations, and similar. For example, the assistance data 4 may be configured for execution assistance of the second software application 20. For example, shortcuts may be created, windows opened and similar by means of the assistance data 4 or its software instructions being carried out in order to provide the user with the right place on the second software application 20 to manipulate the GUI 11. Also, or alternatively, semi-autonomous or fully autonomous execution and operation, with or without approval of consent of the user, e.g., with steps, patterns, sequences etc. in the process of the computer-aided generation, may be provided by carrying out the assistance data 4. The capabilities of the configuration of the assistance data 4 may be depending on the training of the AI model 3 and/or the prompts or instructions given to the AI model 3 on the expected outcome, i.e., what the assistance data 4 is supposed to contain and/or provide, e.g., video tutorials, software instructions to help executing or execute parts of the second software application 20 or the second software application 20 in full, and similar.

Also, the assistance data 4 may be continuously obtained. In particular, based on a current progress of the computer-aided generation of the GUI 11, the AI model 3 may continuously update or provide new assistance data 4. For example, it may also be provided that the new user may ask the AI model 3 for assistance, e.g., with certain tasks or for troubleshooting, by providing user input, in which case the AI model 3 may accordingly provide assistance data 4 configured to support the user for that certain task or for the troubleshooting. For example, this may include generating a video tutorial explaining the steps to solve the certain task or the troubleshooting on the fly. Such video tutorial may be an interactive tutorial, where the user executes certain actions, and which may be monitored and provided to the AI model 3. If the user is stuck at any step, then the assistance data 4 may also be configured to actively help them to achieve the next step, e.g., by opening a window (in which the user can click through the next step(s)), or by creating shortcuts, or by using generated automation code / software instructions for achieving that step directly if the user approves or gives his/her explicit consent, for example. Moreover, if the user deviates from the given steps, then this may be taken as an indirect feedback for future fine-tuning/training of the AI model 3.

As indicated in Fig. 4, there may be a feedback loop, e.g., between the generated GUI 11 and the second software application 20, where the user may provide additional user input 5. This may let the knowledgeable user or engineer assess the assistance data 4 and also use it or carry it out step by steps. Specifically, the GUI 11 may thereby be iteratively improved. This may hence lead to generation of automated advanced or experience-based standard operation procedure videos, and/or experience-based best practice videos.

Consequently, the first software application 10 with its GUI 11 generated with computer aid may be used by an operator to operate a process plant in which the first software application 10 is being used, e.g., an operator who needs to start up the process plant after a turn around. For such example, the operator usually needs to follow a specific standard operation procedure to conduct such a complex task and will need to monitor many process variables and/or set setpoints of controlled variables, which may be enabled by the GUI 11 and its configuration with its visual software elements 12, which may for example show or indicate the process variables, allow setting their setpoints, and/or similar.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope.

## Claims

1. A method (100) for assisting a user in computer-aided generation of at least a part (11) of a software application (10) for an industrial process, the method (100) comprising:
- obtaining assistance data (4) for assisting the user in the computer-aided generation of the at least part (11) of the software application (10), wherein the assistance data (4) is based on process mining of computer-aided generation data (1), the computer-aided generation data (1) relating to previous computer-aided generations of at least parts (11) of software applications (10) for other industrial processes by one or more users, the process mining being at least supported by an artificial intelligence, Al, model (3); and
- providing the assistance data (4) for assisting the user in computer-aided generation of the at least part (11) of the software application (10) by the user.

2. The method (100) of claim 1, wherein the method (100) further comprises:
- receiving user input (5) for the computer-aided generation of the at least part (11) of the software application (10); and
- generating the at least part (11) of the software application (10) based on the provided assistance data (4) and/or the received user input (5).

3. The method (100) of claim 1 or 2, wherein the computer-aided generation data (1) is indicative of user inputs of the one or more users in a second software application (20) for computer-aided generation of the at least part (11) of the software application (10).

4. The method (100) of any one of the previous claims, wherein the computer-aided generation data (1) relates to previous computer-aided generations of the at least parts (11) of the software applications (10) for the other industrial processes by one or more knowledgeable users, for which the computer-aided generation data (1) has been stored for process mining thereof.

5. The method (100) of any one of the previous claims, wherein the computer-aided generation data (1) comprises event and/or action logs for solving one or more problems in the previous computer-aided generations of the at least parts (11) of the software applications (10) for the other industrial processes.

6. The method (100) of any one of the previous claims, wherein the computer-aided generation data (1) includes web scraped data relating to the computer-aided generation of the at least part (11) of the software application (10).

7. The method (100) of any one of the previous claims, wherein the assistance data (4) comprises software instructions for automatically generating at least a portion of the at least part (11) of the software application (10) and/or for guiding the user in manually generating at least a portion of the at least part (11) of the software application (10) based on user input (5).

8. The method (100) of any one of the previous claims, wherein the assistance data (4) comprises video explanations for assisting the user in the computer-aided generation of the at least parts (11) of the software application (10).

9. The method (100) of any one of the previous claims, wherein the assistance data (4) is configured for assisting the user in the computer-aided generation of a graphical user interface as the at least part (11) of the software application (10).

10. The method (100) of any one of the previous claims, wherein the software application (10) is a control software for controlling at least parts of the industrial process.

11. The method (100) of claim 10, wherein the assistance data (4) is configured to assist the user in configuring one or more of the following: a template for at least a part of the industrial process to be controlled by the control software, a control loop of industrial components to be controlled by the control software, a human-machine-interface of the control software, or safety interlocks and/or alarms of the control software.

12. The method (100) of any one of the previous claims, wherein the software application (10) is configured for an industrial process of an industrial plant, in particular a processing plant or a manufacturing plant.

13. The method (100) of any one of the previous claims, wherein the AI model (3) is a generative AI model based on at least one Large Language Model, LLM.

14. A computer program product (40) comprising instructions which, when executed by a data processing system (50), cause the data processing system (50) to carry out the method (100) of any one of the previous claims.

15. A data processing system (50) configured to carry out the method (100) of any one of claims 1 to 13.
